# EUROPÄISCHE PATENTANMELDUNG

(11) **EP 3 608 045 A1**
(43) Veröffentlichungstag der Anmeldung: **12.02.2020**
(21) Anmeldenummer: 19200505.6
(22) Anmeldetag: 30.11.2016
(51) Int. Cl.: B23B 31/117, B23B 31/30, B23B 31/00

(54) **HYDRODEHNSPANNFUTTER**

(30) Priorität: 02.12.2015 DE 102015120971
(62) Teilanmeldung aus: 16805071.4
(71) Anmelder: Gühring Kg, 72458 Albstadt (DE)
(72) Erfinder: TEUSCH, Bruno, 73733 Esslingen (DE); MATHEIS, Klaus, 88605 Sauldorf/Rast (DE)
(74) Vertreter: Winter, Brandl, Fürniss, Hübner, Röss, Kaiser, Polte - Partnerschaft mbB

(57) **Zusammenfassung**

Die Erfindung betrifft ein Hydrodehnspannfutter zum Einspannen eines Werkzeugs, beispielsweise eines Bohrers oder eines Fräsers, umfassend: einen durch einen 3D-Druck einstückig hergestellten Spannteil (3) mit einer Dehnbuchse (1), die eine zentrische Aufnahmeöffnung zum Aufnehmen und Spannen des Werkzeugs aufweist; und einen Anschlussteil (4), insbesondere mit einem HSK-Anschluss (2). Erfindungsgemäß weist die Dehnbuchse (1) wenigstens zwei Druckkammern (5) auf, die um die zentrische Aufnahmeöffnung rundumlaufend ausgebildet, in einem axialen Abstand zueinander angeordnet und bei einer Fluiddruckbeaufschlagung das in der zentrischen Aufnahmeöffnung aufgenommene Werkzeug auswölbbar sind. Die wenigstens zwei Druckkammern (5) sind durch einen Fluidkanal (6) miteinander verbunden.

## Beschreibung

### GEBIET DER ERFINDUNG

Die vorliegende Erfindung betrifft ein Hydrodehnspannfutter zum Einspannen eines Werkzeugs.

### HINTERGRUND DER ERFINDUNG

Gattungsgemäße Hydrodehnspannfutter sind beispielsweise aus der DE 10312743 A1, DE 12011081523 A1, DE 102012215036 A1, DE 102012110392 B4, DE 202012104969 U1 oder WO 2015/166062 A1 bekannt. Die bekannten Hydrodehnspannfutter lassen sich funktional in einen Spannteil mit einer Dehnbuchse, die eine zentrische Aufnahmeöffnung zum Aufnehmen und Spannen eines Werkzeugs aufweist, und einen Anschlussteil, insbesondere mit einem HSK (kurz für: Hohlschaftkegel)-Anschluss, unterteilen. Die Dehnbuchse weist eine um die zentrische Aufnahmeöffnung rundumlaufende, d.h. ringförmige, Druckkammer auf, die mit Fluiddruck beaufschlagbar ist, wodurch die Druckkammer gegen ein in der zentrischen Aufnahmeöffnung der Dehnbuchse aufgenommenes Werkzeug ausdehnt oder auswölbt. Durch die Ausdehnung oder Auswölbung der DRuckkammerwird das in der zentrischen Aufnahmeöffnung aufgenommene Werkzeug, beispielsweise ein Bohrer oder Fräser, kraftschlüssig gespannt. Durch eine Reduzierung des Fluiddrucks in der Druckkammer kann das Werkzeug ausgespannt werden. Die Druckkammer ist in Richtung der zentrischen Aufnahmeöffnung von einer elastisch nachgiebig ausgeführten Trennwand begrenzt. Die Trennwand ist herkömmlich von einer in der Dehnbuchse des Hydrodehnspannfutters fest eingesetzten Spannhülse (vgl. DE 10312743 A1, DE 12011081523 A1, DE 102012215036 A1, DE 102012110392 B4 oder DE 202012104969 U1) gebildet. Jüngere Ansätze gehen dahin, die Trennwand einstückig mit der Dehnbuchse auszubilden (vgl. WO 2015/166062 A1) gebildet. Diesbezüglich ist in der WO 2015/166062 A1 ein Lasersinterverfahren, Feingießverfahren oder dergleichen vorgeschlagen.

Zum Erstellen von geometrischen Formen kann mittlerweile die 3D-Druck-Technik genutzt werden. Die 3D-Druck-Technik weist insbesondere den Vorteil auf, dass beliebige, auch sehr komplizierte, Geometrien erstellt werden können. Geometrien, die bislang fertigungstechnisch schwierig bzw. unmöglich waren herzustellen, sind durch die 3D-Druck-Technik nahezu problemlos herstellbar.

Ungeachtet dessen, ob die Trennwand nun von einer in der Dehnbuchse fest eingesetzten Spannhülse oder von einem mit der Dehnbuchse einstückig ausgebildeten Wandbereich gebildet ist, weist die Trennwand bei den bekannten Hydrodehnspannfuttern - in einem Längsschnitt durch die Längsmittelachse oder Drehachse des Hydrodehnspannfutters gesehen - einen in axialer Richtung von zwei Ringnuten flankierten mittigen dickeren Wandabschnitt auf. Die von der so strukturierten Trennwand in Richtung der zentrischen Aufnahmeöffnung begrenzte Druckkammer lässt sich somit axial in drei Kammerabschnitte unterteilen, die jeweils um die zentrische Aufnahmeöffnung rundumlaufen und miteinander verbunden sind: einen ersten Ringkanal mit einer relativ großen radialen Ausdehnung, einen mittigen Ringkanal mit einer relativ kleinen radialen Ausdehnung und einer zweiten Ringkanal mit einer relativ großen radialen Ausdehnung. Der mittige Ringkanal verbindet den ersten Ringkanal mit dem zweiten Ringkanal. Bei einer Fluiddruckbeaufschlagung der so aufgebauten Druckkammer wird der mittige dickere Wandabschnitt der Trennwand in Richtung der zentrischen Aufnahmekammer gedrängt. Die Druckkammer wölbt sich also im Bereich des mittigen dickeren Wandabschnitts der Trennwand in Richtung der zentrischen Aufnahmekammer aus mit der Folge, dass sich die über die ausgewölbte Trennwand auf ein in der zentrischen Aufnahmeöffnung aufgenommenes Werkzeug ausgeübte Spannkraft auf einen axial eng begrenzten Spannbereich beschränkt. Dies kann zur Lasten der Werkzeugspannfestigkeit und des Werkzeugrundlaufs gehen.

### ZUSAMMENFASSUNG DER ERFINDUNG

Eine Aufgabe der Erfindung ist es daher, ein Hydrodehnspannfutter so weiterzubilden, dass ein in der zentrischen Aufnahmeöffnung einer Dehnbuchse aufgenommenes Werkzeug zur Erhöhung der Werkzeugspannfestigkeit und des Werkzeugrundlaufs über eine größere axiale Länge gespannt werden kann.

Diese Aufgabe wird durch ein Hydrodehnspannfutter nach dem Anspruch 1 gelöst. Vorteilhafte Weiterbildungen sind Gegenstand abhängiger Ansprüche.

Ein erfindungsgemäßes Hydrodehnspannfutter zeichnet sich durch eine Dehnbuchse aus, die wenigstens zwei fluiddruckbeaufschlagbare Druckkammern aufweist, die um die zentrische Aufnahmeöffnung rundumlaufend (ringförmig) ausgebildet sind, die in einem axialen Abstand zueinander angeordnet sind, und die bei einer Druckbeaufschlagung gegen ein in der zentrischen Aufnahmeöffnung aufgenommenes Werkzeug auswölbbar sind. Durch wenigstens zwei axial voneinader beabstandet angeordnete Druckkammern wird eine Mehrstellen- bzw. Mehrflächenspannung bzw. werden mehrere Spannbereiche erreicht.

Als eine Ausführungsform der Erfindung wird ein Hydrodehnspannfutter zum Einspannen eines Werkzeugs, beispielsweise eines Bohrers oder eines Fräsers, zur Verfügung gestellt, umfassend: einen vorderen Teil bzw. Spannteil mit einer Dehnbuchse, die eine zentrische Aufnahmeöffnung zum Aufnehmen und Spannen des Werkzeugs aufweist, und einen hinteren Teil bzw. Anschlussteil, insbesondere mit einem HSK (Hohlschaftkegel)-Anschluss, wobei die Dehnbuchse wenigstens zwei fluiddruckbeaufschlagbare Druckkammern aufweist, die um die zentrische Aufnahmeöffnung rundumlaufend (ringförmig) ausgebildet sind, die in einem axialen Abstand zueinander angeordnet sind, die bei einer Druckbeaufschlagung gegen das in der zentrischen Aufnahmeöffnung aufgenommene Werkzeug auswölbbar sind. Die Dehnbuchse weist des Weiteren wenigstens einen nicht rundumlaufend (exzentrisch oder außermittig) ausgebildeten Kanal auf, der die wenigstens zwei Druckkammern miteinander verbindet.

In einer erfindungsgemäßen Weiterbildung des Hydrodehnspannfutters ist der wenigstens eine Kanal axial, d.h. parallel zur Längsachse des Dehnspannfutters, angeordnet. Alternativ dazu kann der wenigstens eine Kanal aber auch kurvenförmig oder dergleichen ausgebildet sein.

Durch die rundumlaufende Ausbildung der sich in Richtung der zentrischen Aufnahmeöffnung auswölbenden Druckkammern kann ein rundumwirkendes Einspannen eines in der zentrischen Aufnahmeöffnung eingesetzten Werkzeugs an wenigstens zwei, axial voneinander beabstandeten Stellen erreicht werden. die Dehnbuchse kann 2, 3, 4, 5, 6, 7, 8, 9, 10, 11, 12, 13, 14, 15, 16, 17, 18, 19, 20 oder beliebig viele Druckkammern und/oder 1, 2, 3, 4, 5, 6, 7, 8, 9, 10, 11, 12, 13, 14, 15, 16, 17, 18, 19, 20 oder beliebig viele Kanäle aufweisen.

Durch die Anordnung mehrerer Druckkammern und Kanäle, was einer sehr komplizierten Geometrie entspricht, kann ein besonders sicheres Einspannen erzielt werden. Durch Anwendung der 3D-Druck-Technik kann eine derartige komplizierte Geometrie erreicht werden.

Diesbezüglich können/kann der Spannteil mit der Dehnbuchse und der Anschlussteil, insbesondere mit einem HSKAnschluss, durch die 3D-Druck-Technik hergestellt sein.

In einer Weiterbildung des erfindungsgemäßen Hydrodehnspannfutters ist der Spannteil mit Hilfe der 3D-Druck-Technik hergestellt, während der Anschlussteil ist in konventioneller Fertigungsweise hergestellt ist. Durch die Kombination des 3D-Drucks mit einer konventionellen Herstelltechnik können sehr komplexe Werkzeuggeometrien kostengünstig hergestellt werden.

In einer bevorzugten Weiterbildung ist die Dehnbuchse durch die 3D-Druck-Technik hergestellt.

Als eine Idee der Erfindung kann daher angesehen werden, ein Hydrodehnspannfutter oder zumindest Teile eines Hydrodehnspannfutters durch 3D-Druck herzustellen. Hierbei können insbesondere komplizierte Geometrien realisiert werden. Ein wichtiger und fertigungstechnisch komplizierter Teil eines Hydrodehnspannfutters ist das Kanal-Kammersystem, das durch eine Fluiddruckbeaufschlagung zum Einspannen eines eingesetzten Werkzeugs "aufgepumpt" werden kann. Durch die Verwendung der 3D-Druck-Technik kann eine optimale Gestaltung der Kanäle und der Kammern erzeugt werden. Insbesondere kann eine Vielzahl an Kammern erzeugt werden, wodurch statt bisher nur an einzelnen Punkten eine beliebig hohe Anzahl an Einspannbereichen erzeugt werden können. Das Fluid zum Aufwölben der Kammern kann Öl, Wasser oder eine sonstige geeignete Mischung oder Flüssigkeit sein.

Bei den oben diskutierten Gestaltungen kann die Dehnbuchse mit dem Spannteil einstückig hergestellt sein oder zunächst vom Spannteil getrennt hergestellt, dann aber in den Spannteil integriert worden sein. Die letztere Alternative bietet die Möglichkeit, das erfindungsgemäße Hydrodehnspannfutter modular zu gestalten. In einer bevorzugten Ausführungsform kann das erfindungsgemäße Hydrodehnspannfutter daher aus einem Grundkörper, der als integrale Bestandteil den Spannteil und/oder den Anschlussteil enthalten kann, und einer in einer zentrischen Aufnahmeöffnung im Grundkörper eingefügten Dehnbuchse modular ausgeführt sein. Hierzu kann die Dehnbuchse in der grundkörperseitigen zentrischen Aufnahmeöffnung form-, kraft- und/oder stoffschlüssig, vorzugsweise austauschbar, festgelegt sein.

Ein grundkörperseitig vorgesehener Axialanschlag zur Festlegung der axialen Lage der Dehnbuchse im Grundkörper kann die Zusammenstellung des Hydrodehnspannfutters erleichtern. Dieser der Dehnbuchse zugeordnete, grundkörperseitig vorgesehene Axialanschlag kann ein im Grundkörper verschraubtes Schraubelement und ein durch das Schraubelement gegen die Dehnbuchse gedrücktes, vorzugsweise elastisches, Stützelement aufweisen. Das Schraubelement ermöglicht eine axiale Verspannung des Stützelements gegen die Dehnbuchse, um eine enge oder fluiddichte Anlage der Dehnbuchse an dem Axialanschlag zu erreichen. Diese Weiterbildung bietet die Möglichkeit, den grundkörperseitig vorgesehenen Axialanschlag für eine später beschriebene Kühlschmiermittelversorgung eines in der Dehnbuchse eingespannten Werkzeugs mit einzubeziehen.

Insbesondere dann, wenn der Anschlussteil einen HSK-Anschluss aufweist, kann das Schraubelement zweckmäßig von der Seite des Anschlussteils her betätigbar sein. Ein HSK-Anschluss bietet eine einfache Möglichkeit, für einen Einbau und eine Betätigung des Schraubelements und Stützelements in den Grundkörper.

Alternativ zu oder zusätzlich zu dem der Dehnbuchse zugeordneten, grundkörperseitig vorgesehenen Axialanschlag kann das Hydrodehnspannfutter einen eigenen, dem in der Dehnbuchse einzuspannenden Werkzeug zugeordneten, d.h. dehnbuchsenseitig vorgesehenen, Axialanschlag zur Festlegung der axialen Lage des Werkzeugs in der Dehnbuchse aufweisen. Der dem Werkzeug zugeordnete, dehnbuchsenseitig vorgesehene Axialanschlag bietet die Möglichkeit, die axiale Lage des in der Dehnbuchse einzuspannenden Werkzeugs (vor dem Spannen) festzulegen.

Analog zu dem grundkörperseitigen Axialanschlag kann der dehnbuchsenseitig vorgesehene Axialanschlag hierzu mit der Dehnbuchse verschraubt sein, also beispielsweise von einer in die Dehnbuchse eingeschraubten Stellschraube gebildet sein, wobei die Betätigung der Stellschraube zweckmäßig von der Seite des Anschlussteils her erfolgen kann.

Unabhängig von den oben diskutierten Gestaltungen kann das erfindungsgemäße Hydrodehnspannfutter einen zentrisch verlaufenden Kühlschmiermittelversorgungskanal zur Versorgung eines in der Dehnbuchse eingespannten Werkzeugs mit Kühlschmiermittel aufweisen. Je nach der konkreten Gestaltung kann sich der zentrische verlaufende Kühlschmiermittelkanal von einer anschlussteilseitigen Einspeiseöffnung, die beispielsweise innerhalb des HSK-Anschlusses liegt, bis zu einer dehnbuchsenseitigen Mündungsöffnung, die beispielsweise in einem dem einzuspannenden Werkzeug zugeordneten Axialanschlag, z.B. Stellschraube, liegt, erstrecken.

### KURZE BESCHREIBUNG DER ZEICHNUNGEN

Weitere Einzelheiten und Vorteile der Erfindung werden anhand der in den Zeichnungen dargestellten Ausführungsformen deutlich. Es zeigen
Fig. 1 eine Teillängsschnittdarstellung eines Hydrodehnspannfutters gemäß einer ersten Ausführungsform,
Fig. 2 eine Querschnittdarstellung durch das Hydrodehnspannfutter an der in Fig. 1 mit II-II angegebenen Stelle,
Fig. 3 eine Vorderansicht Hydrodehnspannfutters (Fig. 1: Pfeil III),
Fig. 4 eine perspektivische Vorderansicht des Hydrodehnspannfutters,
Fig. 5 eine perspektivische Längsschnittdarstellung eines vorderen Teils (Spannteils) eines Hydrodehnspannfutters gemäß einer zweiten Ausführungsform,
Fig. 6 eine Längsschnittdarstellung des vorderen Teils (Spannteils),
Fig. 7 eine perspektivische Rückansicht des mit Hilfe einer 3D-Druck-Technik hergestellten Spannteils in einem Zustand unmittelbar nach dem 3D-Druck,
Fig. 8 eine Längsschnittdarstellung des aus dem vorderen Teil (Spannteil) und einem hinteren Teil (Anschlussteil) gebildeten Hydrodehnspannfutters,
Fig. 9 eine Längsschnittdarstellung des Spannteils in einem Zustand unmittelbar nach dem 3D-Druck in einer gegenüber der Darstellung in Fig. 4, Fig. 6 oder Fig. 8 um die Längsmittelachse des Hydrodehnspannfutters verdrehten Lage,
Fig. 10 einen perspektivischen Teillängsschnitt einer Dehnbuchse durch den vorderen Teil (Spannteil) des Hydrodehnspannfutters,
Fig. 11 einen weiteren perspektivischen Teillängsschnitt der Dehnbuchse in einer gegenüber der Darstellung in Fig. 10 um die Längsmittelachse des Hydrodehnspannfutters leicht gedrehten Lage,
Fig. 12 eine perspektivische Querschnittdarstellung der Dehnbuchse an der in Fig. 10 mit XII-XII angegebenen Stelle,
Fig. 13 einen weitere perspektivische Querschnittdarstellung der Dehnbuchse an der in Fig. 10 mit XIII-XIII angegebenen Stelle,
Fig. 14 einen weiteren perspektivische Querschnittdarstellung der Dehnbuchse an der in Fig. 10 mit XIV-XIV angegebenen Stelle,
Fig. 15 eine Längsschnittdarstellung eines Hydrodehnspannfutters gemäß einer dritten Ausführungsform,
Fig. 16 eine perspektivische Darstellung des Hydrodehnspannfutters aus Fig. 15, und
Fig. 17 eine Querschnittdarstellung an der in Fig. 15 mit XVII-XVII angegebenen Stelle.

### AUSFÜHRUNGSFORMEN

### Erste Ausführungsform

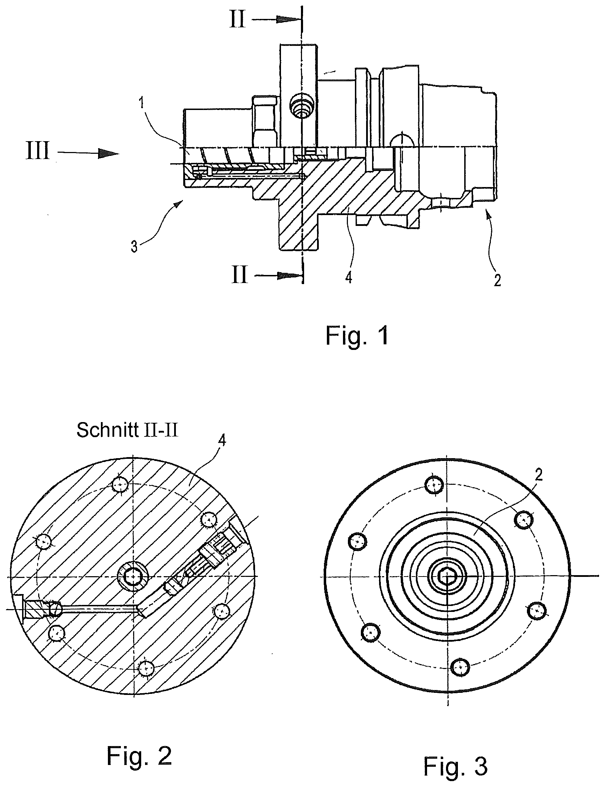

Fig. 1 zeigt ein Hydrodehnspannfutter gemäß einer ersten Ausführungsform mit einer Dehnbuchse 1 in einem vorderen Teil (Spannteil) 3 und einem HSK-Anschluss 2 in einem hinteren Teil (Anschlussteil) 4. Der vordere Teil 3 ist in 3D-Druck-Technik hergestellt, während der hintere Teil 4 in konventioneller Fertigungsweise hergestellt ist.

Wie es in Fig. 1 zu erkennen ist, weist die Dehnbuchse 1 zwei um eine zentrische Aufnahmeöffnung rundumlaufende, d.h. ringförmige, in einem axialen Abstand zueinander angeordnete Druckkammern auf, die mit Fluiddruck beaufschlagbar sind, wodurch sich die Druckkammern gegen ein in der zentrischen Aufnahmeöffnung der Dehnbuchse 1 aufgenommenes (nicht dargestelltes) Werkzeug ausdehnen oder auswölben. Durch die Ausdehnung oder Auswölbung der Druckkammern wird das in der zentrischen Aufnahmeöffnung aufgenommene Werkzeug, beispielsweise ein Bohrer oder Fräser, kraftschlüssig gespannt. Durch eine Reduzierung des Fluiddrucks in den Druckkammern kann das Werkzeug ausgespannt werden. Die Druckkammern sind in Richtung der zentrischen Aufnahmeöffnung jeweils von einer elastisch nachgiebig ausgeführten Trennwand begrenzt. Die beiden Druckkammern sind durch einen in Fig. 1 durch einen dicken schwarzen Strich angedeuteten Verbindungskanal miteinander in Verbindung. Eine in Fig. 1 ebenalls zu sehende Fluidzuleitung führt zu der in Fig. 1 linken, vorderen Druckkammer. Der Verbindungskanal ist im Unterschied zu den beiden Druckkammern nicht rundumlaufend, sondern exzentrisch oder außermittig angeordnet, und verläuft parallel zur Längsmittelachse des Hydrodehnspannfutters.

Fig. 2 zeigt einen Querschnitt des Hydrodehnspannfutters an der in Fig. 1 mit II-II angegebenen Stelle. Zu sehen sind die Zuleitungen des Fluids zu den Druckkammern in der Dehnbuchse. Die Fig. 2 zeigt des Weiteren eine zentrisch angeordnete Stellschraube, die einen Axialanschlag für ein in der Dehnbuchse 1 einzuspannendes Werkzeug bildet.

Fig. 3 zeigt eine Vorderansicht des Hydrodehnspannfutters (Fig. 1: Pfeil III).

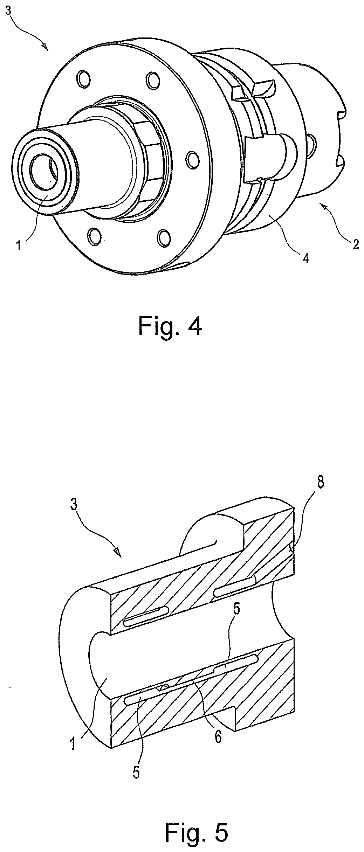

Fig. 4 zeigt in einer perspektivischen Vorderansicht das Hydrodehnspannfutter mit dem vorderen Teil 3, in dem die Dehnbuchse 1 angeordnet ist, und dem hinteren Teil 4 mit insbesondere dem HSK-Anschluss 2.

### Zweite Ausführungsform

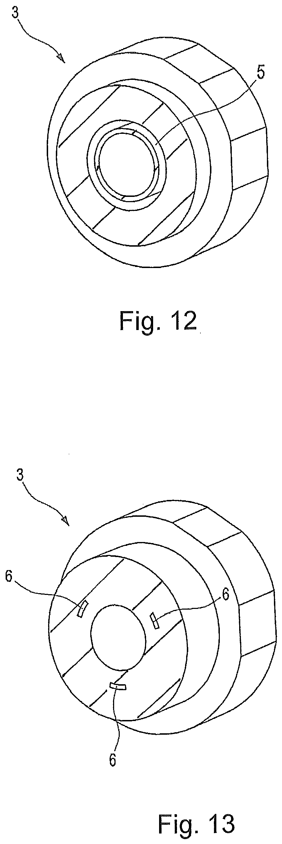

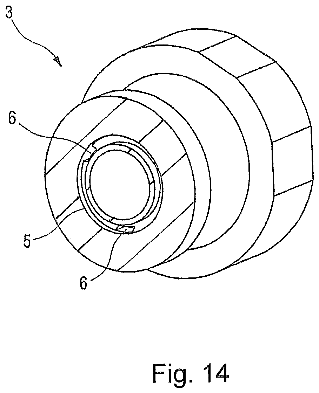

Fig. 5 zeigt eine perspektivische Darstellung des vorderen Teils (Spannteils) 3 eines Hydrodehnspannfutters gemäß einer zweiten Ausführungsform mit einer Dehnbuchse 1, zwei Druckkammern 5 drei Verbindungskanälen 6 (vgl. hierzu Fig. 13 und Fig. 14) und einer Zuleitung 8. Die Druckkammern 5 sind zur Aufnahme eines Fluids, insbesondere Öl oder Wasser, vorgesehen. Durch die Aufnahme des Fluids wölben sich die Druckkammern 5 nach innen in Richtung der zentrischen Aufnahmeöffnung aus, wodurch an diesen Stellen der lichte Durchmesser der Dehnbuchse 1 sich verringert. Hierdurch kann ein Einspannen eines eingesetzten Werkzeugs erfolgen. Durch die Anordnung mehrerer, in der gezeigten Ausführungsform zweier, Kammern 5 können mehrere, in der gezeigten Ausführungsform zwei, Bereiche mit beim Einspannen verringertem lichten Durchmesser erreicht werden, wodurch sich im Vergleich zu den eingangs diskutierten Hydrodehnspannfutter ein flächiges Einspannen des betreffenden Werkzeugs ergibt. Im Besonderen ist im Vergleich mit den Hydrodehnspannfuttern des Stands der Technik, bei denen sich grundsätzlich nur eine einzige Druckkammer nach innen auswölbt, eine flächige Einspannung erzielbar. Durch eine flächige Einspannung kann eine symmetrische Einspannung sichergestellt werden, wodurch sich ein sehr guter Rundlauf des betreffenden Werkzeugs ergibt. Außerdem kann eine hohe Stabilität erreicht werden, die zu einer hohen Fertigungsgenauigkeit führt. In einer besonderen Ausführungsform können die Verbindungskanäle 6 vorteilhafterweise ca. 3 mm breit und ca. 0,7 mm hoch sein. Die Druckkammern 5 können diese Maße aufweisen oder in einer weiteren vorteilhaften Ausführungsform größer dimensioniert sein.

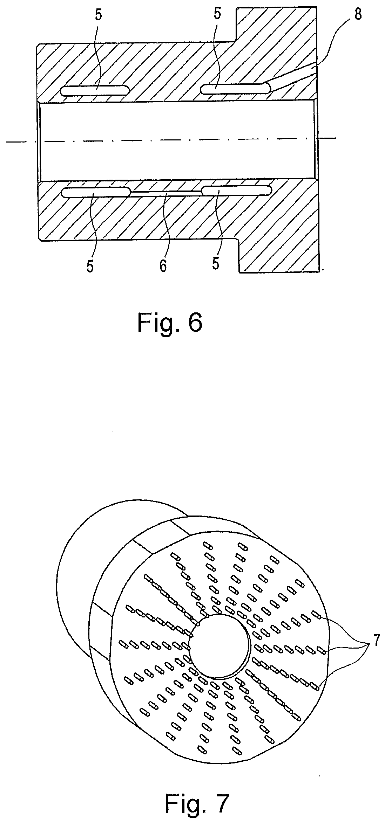

Fig. 6 zeigt in einem Längsschnitt die beiden Druckkammern 5 und einen der drei Verbindungskanäle 6. Die Zuleitung 8 versorgt die Druckkammern 5 und die Verbindungskanäle 6 mit einem Fluid, beispielsweise Öl oder Wasser.

Fig. 7 zeigt eine perspektivische Rückansicht des vorderen Teils (Spannteils) des Hydrodehnspannfutters. Vorteilhafterweise wird nur der vordere Teil als 3D-Druck ausgeführt. Der hintere Teil kann in konventioneller Technik erstellt werden. Hierdurch kann der vordere Teil mit komplizierter Geometrie als 3D-Druck aufgebaut werden. In einer alternativen Ausführung kann das komplette Hydrodehnspannfutter bzw. das komplette Hydraulik-Dehnspannfutter als 3D-Druck erstellt werden.

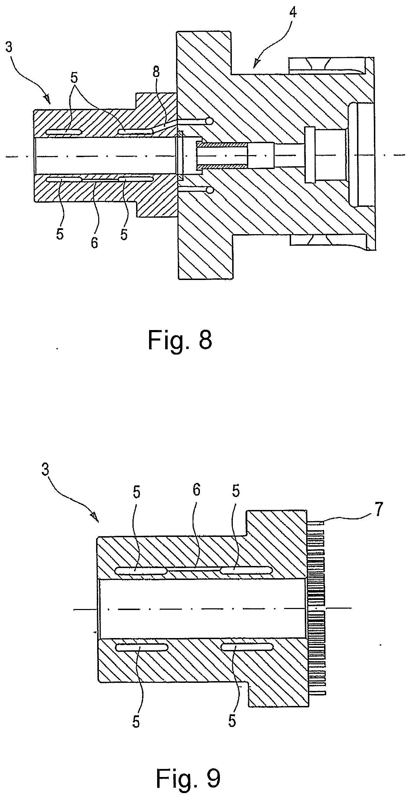

Fig. 8 zeigt in einer Längsschnittdarstellung das Hydrodehnspannfutter mit dem vorderen Teil 3 mit Druckkammern 5 und einem der Verbindungskanäle 6 und den hinteren Teil 4 in einem zusammengefügten Zustand. Zur Zuleitung eines Fluids in die Druckkammern 5 bzw. Verbindungskanäle 6 kann eine weitere Leitung 8 vorgesehen sein.

Fig. 9 zeigt eine Längsschnittdarstellung des vorderen Teils mit Druckkammern 5 und einem der Verbindungskanäle 6. Der vordere Teil kann Stifte 7 zur Verbindung des vorderen Teils mit dem hinteren Teil aufweisen.

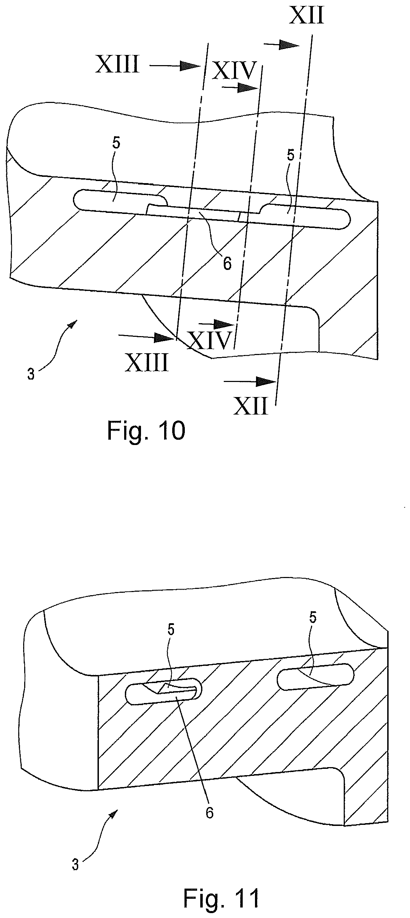

Fig. 10 zeigt einen teilweisen perspektivischen Längsschnitt des vorderen Teils des Hydrodehnspannfutters mit Druckkammern 5 zur Aufnahme eines Fluids und einem der Verbindungskanäle 6. Durch die Aufnahme des Fluids können die Druckkkammern 5 nach innen, ins Zentrum des Dehnspannfutters gerichtet, ausgewölbt werden, wodurch ein in der zentrischen Aufnahmeöffnung eingesetztes Werkzeug gespannt werden kann. Der Verbindungskanal 6 verbindet die beiden benachbarten Druckkammern 5, damit sich das Fluid von einer Druckkammer 5 zur nächsten Druckkammer 5 ausbreiten kann. Hierdurch kann sichergestellt werden, dass sämtliche Druckkammern 5 mit Fluid gefüllt werden. Die Druckkammern 5 können rundumlaufend, insbesondere zylindrisch, ausgebildet sein. Die Verbindungskanäle 6 sind insbesondere axial verlaufend und weisen keine rundumlaufende Ausbildung auf.

Fig. 11 zeigt einen weiteren perspektivischen Teillängsschnitt des vorderen Teils des Hydrodehnspannfutters, wobei dieser Längsschnitt gegenüber dem Längsschnitt der Fig. 10 um die Längsmittelachse des Hydrodehnspannfutters leicht verdreht ist. Zu sehen sind die beiden Druckkammern 5.Der Verbindungskanal 6 ist im Vergleich zu der Darstellung in Fig. 10 nur ansatzweise zu sehen. Die Druckkammern 5 weisen eine zylindrische Ausformung auf und sind daher in jedem Längsschnitt zu sehen. Im Gegensatz dazu sind die Verbindungskanäle 6 exzentrisch axial verlaufend ausgebildet und daher nicht in jedem Längsschnitt zu sehen. Die Verbindungskanäle können um 120° versetzt angeordnet sein, wobei in diesem Fall, wie in der gezeigten Ausführungsform, drei Verbindungskanäle in Umfangsrichtung des Hydrodehnspannfutters um die zentrische Aufnahmeöffnung herum angeordnet sind.

Fig. 12 zeigt einen in Fig. 10 durch XII-XII angegebenen, perspektivischen Querschnitt durch den vorderen Teil 3 des Hydrodehnspannfutters, der durch 3D-Druck hergestellt wurde. Es ist eine der beiden Druckkammern 5 dargestellt, die zylindrisch und rundumlaufend ausgebildet ist. Hierdurch kann die Druckkammer 5 bei Befüllen durch ein Fluid von allen Seiten ein kraftschlüssiges Spannen eines in der zentrischen Aufnahmeöffnung der Dehnbuchse des Hydrodehnspannfutters eingesetzten Werkzeugs, beispielsweise eines Bohrers oder eines Fräsers, gewährleisten.

Fig. 13 zeigt einen in Fig. 10 mit XIII-XIII angegebenen weiteren perspektivischenQuerschnitt durch den vorderen Teil des Hydrodehnspannfutters, in demdrei exzentrisch angeordnete Verbindungskanäle 6 zu sehen sind, die axial verlaufend ausgebildet sind. Die Verbindungskanäle 6 sind axial verlaufend, d.h. im Unterschied zu den Druckkammern 5 nicht rundumlaufend.

Fig. 14 zeigt einen in Fig. 10 mit XIV-XIV angegebenen weiteren perspektivischen Querschnitt, in dem die in Fig. 10 hintere Druckkammer 5 sowie zwei der Verbindungskanäle 6 in der Dehnbuchse dees vorderen Teils 3 des Hydrodehnspannfutters zu sehen sind.

### Dritte Ausführungsform

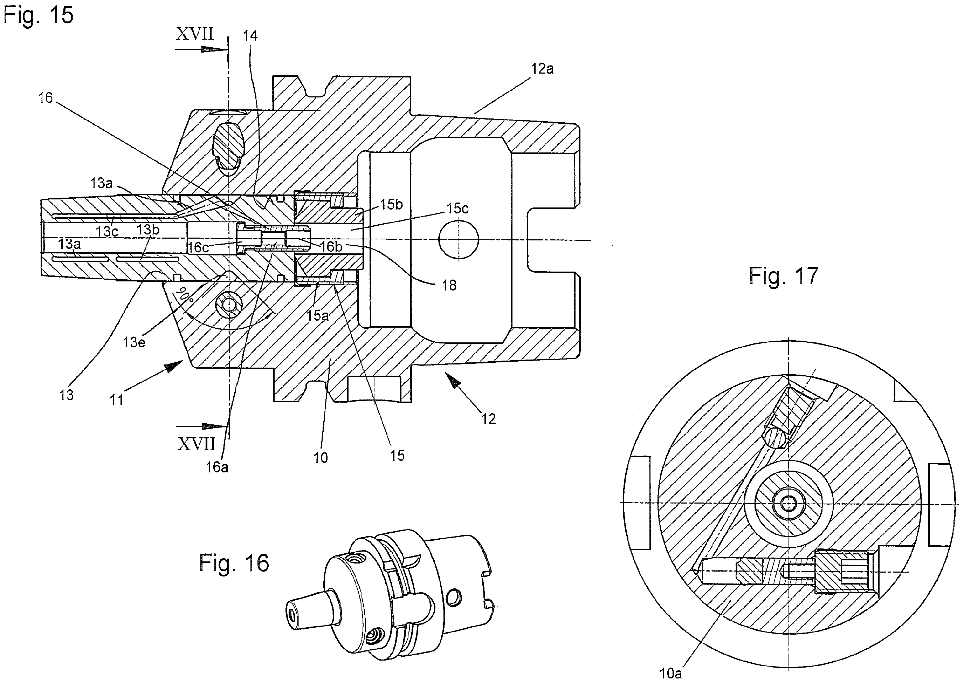

Fig. 15 zeigt eine Längsschnittdarstellung eines Hydrodehnspannfutters gemäß einer dritten Ausführungsform, die sich von der ersten und zweiten Ausführungsform im Wesentlichen durch einen modularen Aufbau unterscheidet. Fig. 16 zeigt eine perspektivische Darstellung des Hydrodehnspannfutters aus Fig. 15, während Fig. 17 eine Querschnittdarstellung an der in Fig. 15 mit XVII-XVII angegebenen Stelle zeigt.

Im Unterschied zu ersten und zweiten Ausführungsform, in denen die Dehnbuchse mit dem Spannteil einstückig hergestellt bzw. integraler Bestandteil des Spannteils ist, ist in der dritten Ausführungsform die Dehnbuchse eine von dem Spannteil getrennt hergestellte, unabhängige Komponente, die in den Spannteil durch Einfügung integriert ist, wie es in Fig. 15 gezeigt ist.

In der dritten Ausführungsform weist das Hydrodehnspannfutter im Besonderen einen Grundkörper 10 auf, der als integrale Bestandteile einen Spannteil 11 und einen Anschlussteil 12 aufweist. Der Grundkörper 10 weist im Bereich des Spannteils 11 eine zentrische Aufnahmeöffnung 14 auf, in der eine Dehnbuchse 13 mit einer definierten Spiel-, Übergangs- oder Schrumpfpassung eingefügt und form-, kraft- (beispielsweise durch Schrumpfen) und/oder stoffschlüssig (beispielsweise durch Löten) befestigt ist.

Wie die Fig. 15 zeigt, weist die Dehnbuchse 13 zwei, in einem axialen Abstand zueinander angeordnete, ringförmige (rundumlaufende) Druckkammern 13a, 13b auf, die über einen wenigstens einen exzentrisch liegenden (d.h. nicht rundumlaufenden), axial verlaufenden Verbindungskanal 13c fluidtechnisch miteinander verbunden sind. Die Druckbeaufschlagung der beiden Kammern 13a, 13b erfolgt über eine dehnbuchsenseitige Zuleitung 13d, die in eine rundumlaufende V-förmige Ringnut 13e am Außenumfang der Dehnbuchse 13 mündet. Die Ringnut 13e wird über ein grundkörperseitig ausgebildetes Kanalsystem 10a, das in Fig. 17 veranschaulicht ist, in an sich bekannter Weise mit Fluid gespeist bzw. mit Fluidruck beaufschlagt. Bei einer Druckbeaufschlagung der beiden Druckkammern 13a, 13b wölben sich die Druckkammern 13a, 13b nach innen hin aus, wodurch ein in der zentrischen Aufnahmeöffnung aufgenommenes Werkzeug an zwei voneinander beabstandet liegenden Stellen oder Spannbereichen kraftschlüssig gespannt wird.

Die axiale Lage der Dehnbuchse 13 ist durch einen im Grundkörper 10 vorgesehenen Axialanschlag 15 festgelegt, der in der gezeigten Ausführungsform aus einem hülsenförmigen Schraubelement 15a und einem ebenfalls hülsenförmigen elastischen Stützelement 15b gebildet ist, an dem die Dehnbuchse 13 zum Spannen axial abgestützt ist. Das Schraubelement 15a ist über das Stützelement 15b gestülpt und drückt das Stützelement 15b gegen die Dehnbuchse 13. Dank der Elastizität des Stützelements 15b kann eine fluiddichte Verbindung zwischen dem Stützelement 15b und der Dehnbuchse 13 erreicht werden.

In der gezeigten Ausführungsform, in der der Anschlussteil 12 einen HSK-Anschluss 12a aufweist, kann das Schraubelement 15a zweckmäßig von der Seite des Anschlussteils 12 her betätigt werden.

Wie es in Fig. 15 gezeigt ist, weist die Dehnbuchse 13 einen dem in der Dehnbuchse einzuspannenden Werkzeug zugeordneten, d.h. dehnbuchsenseitig vorgesehenen, Axialanschlag 16 auf, der die axiale Lage des Werkzeugs in der Dehnbuchse 13 festlegt. In der gezeigten Ausführungsform ist der dehnbuchsenseitig vorgesehene Axialanschlag 16 mit der Dehnbuchse verschraubt und im Besonderen von einer in die Dehnbuchse 13 eingeschraubten Stellschraube gebildet. Die Betätigung der Stellschraube 16 kann in der gezeigten Ausführungsform sowohl von der Seite des Anschlussteils 12 als von der Seite des Spannteils 11 bzw. der Seite der Dehnbuchse 13 her erfolgen. Zu diesem Zweck ist in der Stellschraube 16 eine von beiden axialen Seiten her zugängliche Eingriffsöffnung 16a, z.B. Innensechskantöffnung, vorgesehen. Wie die Fig. 15 zeigt, ragt die Stellschraube 16 in das hülsenförmige Stützelement 15b hinein.

Das in Fig. 15 gezeigte Hydrodehnspannfutter zeichnet sich des Weiteren durch einen zentrisch verlaufenden Kühlschmiermittelversorgungskanal 18 zur Versorgung eines in der Dehnbuchse 13 eingespannten Werkzeugs mit Kühlschmiermittel aus. Der zentrische verlaufende Kühlschmiermittelkanal 18 führt durch einen axialen Durchgang 15c, z.B. Bohrung, in dem hülsenförmigen Stützelement 15b sowie einen in Fig. 15 rechten Bohrungsabschnitt 16b, die Eingriffsöffnung 16a und einen in Fig. 15 linken Bohrungsabschnitt 16c in der Stellschraube 16. Die Bohrungsabschnitte 16b, 16c haben einen ausreichend großen Bohrungsdurchmesser, um mit einem geeigneten Werkzeugschlüssel auf den zwischen den beiden Bohrungsabschnitten 16b, 16c liegende Eingriffsöffnung 16a eingreifen zu können. Das in Fig. 15 rechte Ende des Durchgangs 15c des hülsenförmigen Stützelements 15b entspricht dabei einer anschlussteilseitigen Einspeiseöffnung, das in Fig. 15 linke Ende des Bohrungsabschnitts 16c einer dehnbuchsenseitigen Mündungsöffnung.

## Patentansprüche

1. Hydrodehnspannfutter zum Einspannen eines Werkzeugs, beispielsweise eines Bohrers oder eines Fräsers, umfassend:
einen Spannteil (3) mit einer Dehnbuchse (1), die eine zentrische Aufnahmeöffnung zum Aufnehmen und Spannen des Werkzeugs aufweist, wobei der Spannteil (3) mit der Dehnbuchse (1) durch einen 3D-Druck einstückig hergestellt ist, und
einen Anschlussteil (4), insbesondere mit einem HSK-Anschluss (2), **dadurch gekennzeichnet, dass**
die Dehnbuchse (1) wenigstens zwei Druckkammern (5) aufweist, die um die zentrische Aufnahmeöffnung rundumlaufend ausgebildet, in einem axialen Abstand zueinander angeordnet und bei einer Druckbeaufschlag gegen das in der zentrischen Aufnahmeöffnung aufgenommene Werkzeug auswölbbar sind, und
die wenigstens zwei Druckkammern (5) durch wenigstens einen nicht rundumlaufend ausgebildeten Kanal (6) miteinander verbunden sind.

2. Hydrodehnspannfutter nach Anspruch 1, **dadurch gekennzeichnet, dass** der Kanal axial angeordnet ist.

3. Hydrodehnspannfutter nach einem der vorhergehenden Ansprüche, **dadurch gekennzeichnet, dass** die Dehnbuchse (1) mehr als zwei Kammern (5) und/oder mehrere Kanäle aufweist.

4. Hydrodehnspannfutter nach einem der vorhergehenden Ansprüchen, **dadurch gekennzeichnet, dass** der Anschlussteil (4) durch einen 3D-Druck hergestellt ist.

5. Hydrodehnspannfutter nach einem der vorhergehenden Ansprüche, **gekennzeichnet durch** einen der Dehnbuchse zugeordneten Axialanschlag zur Festlegung der axialen Lage der Dehnbuchse im Grundkörper.

6. Hydrodehnspannfutter nach Anspruch 5, **dadurch gekennzeichnet, dass** der der Dehnbuchse zugeordnete Axialanschlag ein im Grundkörper verschraubtes Schraubelement und ein durch das Schraubelement gegen die Dehnbuchse gedrücktes Stützelement aufweist.

7. Hydrodehnspannfutter nach Anspruch 6, **dadurch gekennzeichnet, dass** das Schraubelement von der Seite des Anschlussteils her betätigbar ist.

8. Hydrodehnspannfutter nach einem der vorhergehenden Ansprüche, **gekennzeichnet durch** einen einem in der Dehnbuchse einzuspannenden Werkzeug zugeordneten Axialanschlag zur Festlegung der axialen Lage des Werkzeugs in der Dehnbuchse.

9. Hydrodehnspannfutter nach Anspruch 8, **dadurch gekennzeichnet, dass** der dem Werkzeug zugeordnete Axialanschlag von einer in die Dehnbuchse eingeschraubten Stellschraube gebildet ist.

10. Hydrodehnspannfutter nach Anspruch 9, **dadurch gekennzeichnet, dass** die Stellschraube von der Seite des Anschlussteils her betätigbar ist.

11. Hydrodehnspannfutter mit einem der Dehnbuchse zugeordneten Axialanschlag nach einem der vorhergehenden Ansprüche, **gekennzeichnet durch** einen zentrisch verlaufenden Kühlschmiermittelversorgungskanal zur Versorgung eines in der Dehnbuchse eingespannten Werkzeug mit Kühlschmiermittel.
